# FASCICULE DE BREVET EUROPEEN

(11) **EP 2 844 057 B1**
(45) Date de publication et mention de la délivrance du brevet: **27.04.2016**
(21) Numéro de dépôt: 13720898.9
(22) Date de dépôt: 29.04.2013
(51) Int. Cl.: A01G 3/037

(54) **OUTIL ÉLECTROPORTATIF**
HANDWERKZEUGMASCHINE
HANDHELD POWER TOOL

(30) Priorité: 04.05.2012 CH 615122012
(43) Date de publication de la demande: 11.03.2015
(73) Titulaire: FELCO Motion SA, 2206 Les Geneveys-sur-Coffrane (CH)
(72) Inventeur: ZURCHER, Alain, CH-1142 Pampigny (CH)
(74) Mandataire: P&TS SA (AG, Ltd.)
(86) Numéro de dépôt international: PCT/EP2013/058906
(87) Numéro de publication internationale: WO 2013/164310

(56) Documents cités:
- EP-A1- 2 213 426
- DE-U1- 8 814 543
- FR-A- 1 503 674

## Description

### Domaine technique

La présente invention concerne un outil électroportatif et notamment, mais pas exclusivement, un outil portatif avec un actionneur électrique alimenté à batteries pour actionner une lame, un couteau ou un autre organe mobile.

### Etat de la technique

On connait dans la technique plusieurs exemples d'outils portatif de type sécateur ou cisailles dotés d'un actionneur électrique, hydraulique ou pneumatique, permettant ainsi d'alléger l'activité des opérateurs. Ces outils sont utilisés notamment dans le domaine de l'agriculture ou de la viticulture, par exemple pour des opérations de taille. Le même principe, c'est-à-dire l'intégration d'un actionneur électrique, pneumatique ou hydraulique dans un outil portatif, est également employé dans des cisailles, des pinces à sertir, des presses, et beaucoup d'autres outils utilisés en plusieurs activités industrielles.

La disponibilité d'accumulateurs électrochimique légers et performants a favorisé récemment le développement des outils à actionnement électrique, plus légers et rapides des correspondants outils à actionnement pneumatique ou hydraulique. Les actionneurs électriques linéaires contenus dans ces outils sont toutefois plus délicats des vérins pneumatiques et doivent être protégés de l'attaque de poussières, corps étrangers et liquides. Notamment dans le domaine de l'agriculture, lorsque les opérations de taille sont combinés avec des traitements de pulvérisation.

Le développement de batteries et d'actionneurs plus performantes et compacts a d'ailleurs permis la réalisation d'outils de plus en plus puissants, qui sont appelés à générer des forces mécaniques très importantes. Ces efforts, notamment lorsqu'il s'agit d'efforts latéraux, peuvent réduire la fiabilité et la longévité de l'actionneur.

Dans la majorité des sécateurs électroportatifs, l'actionneur linéaire opère en traction lors de la course de travail de l'outil et agit directement sur la lame mobile, ou par l'intermédiaire d'un système de leviers auxiliaires. Compte tenu de la nécessité de limiter les dimensions de l'outil, la transmission de la force dans les outils connus est rarement optimale.

EP0291431 décrit un sécateur comprenant un moteur électrique accouplé à un réducteur. La sortie du réducteur est accouplée à un système vis-écrou à billes, comprenant une vis à billes mobile en rotation et immobilisée en translation, et un écrou à billes mobile en translation et immobilisé en rotation. L'écrou mobile axialement est relié, au moyen d'un couple de biellettes, à la lame mobile. Dans ce sécateur la force de travail est transmise en tirant la lame mobile.

DE8814543, FR1503674 et EP2213426 décrivent des sécateurs électroportatifs comprenant un système vis-écrou, dans lesquels la force de travail est transmise en poussant la lame mobile du sécateur à l'aide d'une ou plusieurs bielles, qui relient la lame mobile des sécateurs au système vis-écrou.

Dans ces sécateurs les efforts latéraux et de flexion, qui peuvent être très importants dans le cas d'un sécateur électroportatifs, agissent sur l'actionneur, c'est-à-dire sur le système vis-écrou, ce qui diminue l'efficacité de transmission et la fiabilité du sécateur.

### Bref résumé de l'invention

Il y a dès lors la nécessité de proposer un système de transmission de la force de l'actionneur à la lame, ou à l'organe mobile de l'outil qui combine une excellente efficacité mécanique et un guidage rigoureux, limitant les forces agissant sur l'actionneur lui-même.

La présente invention propose dès lors un outil électroportatif tel que défini dans la revendication 1.

Il y a également la nécessité de proposer des solutions pour protéger les actionneurs des corps étrangers et de la poussière, tout en préservant leur efficacité et compacité.

Selon un aspect de l'invention, ces buts sont atteints notamment au moyen d'un outil électroportatif comprenant un actionneur agissant par l'intermédiaire d'une bielle sur un organe mobile lequel peut effectuer, sous l'action de l'actionneur, des mouvements dans les deux sens, dans lequel l'actionneur est appelé à fournir une force de travail lorsque l'organe mobile se déplace dans un premier sens correspondant à course de travail de l'outil, et une force de retour sensiblement inférieure à la force de travail lorsque l'organe mobile se déplace dans le sens opposé au premier sens, correspondant à une course de retour de l'outil, et dans lequel la force de travail est transmise en poussant l'organe mobile. Selon cet aspect de l'invention, l'effort majeur est fourni par une action de compression de la bielle de transmission, tandis que dans les instruments connus, l'effort majeur est transmis lorsque la bielle est en traction. Cette caractéristique permet une liaison plus directe entre l'actionneur et la lame, ou l'organe mobile, et améliore la compacité de l'ensemble.
Avantageusement l'actionneur de l'outil électroportatif selon l'invention est relié à la bielle par une première liaison de type rotule et à un élément de guidage par une deuxième liaison de type rotule concentrique avec ladite première liaison. Cette caractéristique permet un guidage précis de la bielle, et la transmission des efforts latéraux au corps de l'outil, tandis que l'actionneur est soumis à des efforts purement axiaux.

Dans une variante une extrémité mobile de l'actionneur est reliée à une bague de guidage coulissant à l'intérieur du corps de l'outil, de façon à ce que le corps de l'outil et la bague de guidage délimitent un volume protégé à l'intérieur duquel est disposé l'actionneur. De cette façon, l'actionneur est protégé des effets nuisibles des poussières, de la pluie, et des liquides qui peuvent être présents dans le milieu d'utilisation de l'outil.

Ces aspects de l'invention peuvent être combinés selon les circonstances, comme on le verra par la suite.

On utilisera également, dans la description, les indications 'antérieur', 'avant', ou 'distal', pour désigner l'extrémité de l'outil normalement la plus éloignée de l'opérateur, tandis que les termes 'postérieur', 'arrière', 'proximal', sont utilisés pour indiquer l'extrémité de l'outil plus proche de l'opérateur lors de l'usage normal. L'extrémité avant comporte en général les organes actifs de l'outil, par exemple des lames, tandis que l'extrémité arrière est munie d'une poignée permettant la saisie par l'opérateur.

### Brève description des figures

Des exemples de mise en oeuvre de l'invention sont indiqués dans la description illustrée par les figures annexées dans lesquelles :
Les figures 1a et 1c illustrent, en deux vues orthonormées, un exemple d'outil de l'invention en configuration rétractée (lames ouvertes).
Les figures 1b et 1d illustrent en détail de la liaison entre la bielle et l'actionneur de l'outil de la figure 1a, respectivement 1c.
La figure 2 illustre une partie de l'actionneur de l'invention.
Les figures 3a et 3c illustrent, en deux vues orthonormées, un exemple d'outil de l'invention en configuration allongé (lames fermées).
Les Fig. 3b et 3d illustrent en détail de la liaison entre la bielle et l'actionneur de l'outil de la figure 3a, respectivement 3c.

Dans la description suivante fournie à titre d'exemple, on fera référence, pour simplicité, à un sécateur. Il faut toutefois comprendre que l'invention n'est pas limitée à un tel instrument, mais inclut également tous les outils couverts par les revendications. L'invention n'est pas non plus limitée à l'agriculture, mais inclut aussi, par exemple des cisailles, des pinces ou des presses pour des applications industrielles, médicales, ou toute autre domaine.

### Exemple(s) de mode de réalisation de l'invention

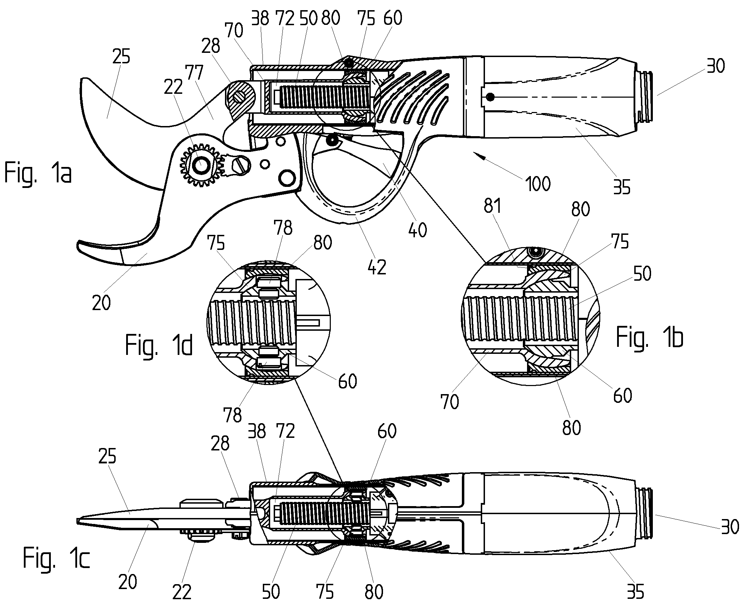

Les figures 1a et 1c illustrent un sécateur selon un aspect de l'invention avec un manche 35, destiné à être saisi par l'opérateur, relié à une source d'alimentation électrique par le connecteur 30 et un cordon non représenté. L'opérateur peut commander le mouvement de la lame mobile 25 relativement à la contre-lame 20 en agissant sur la gâchette 40 qui est protégée par la garde 42. Typiquement, en tirant sur la gâchette 40 on déclenche la course de travail de l'outil dans laquelle la lame mobile 25 se déplace dans un premier sens et, par exemple, se referme sur la contre-lame 20 pour couper une branche, tandis qu'en relâchant la gâchette 40 on donne lieu à la course de retour, dans laquelle la lame mobile 25 se déplace dans le sens opposé et s'écarte de la contre-lame 20. Typiquement, la force exercée lors de l'action de coupe est sensiblement supérieure à quelle requise dans la course de retour.

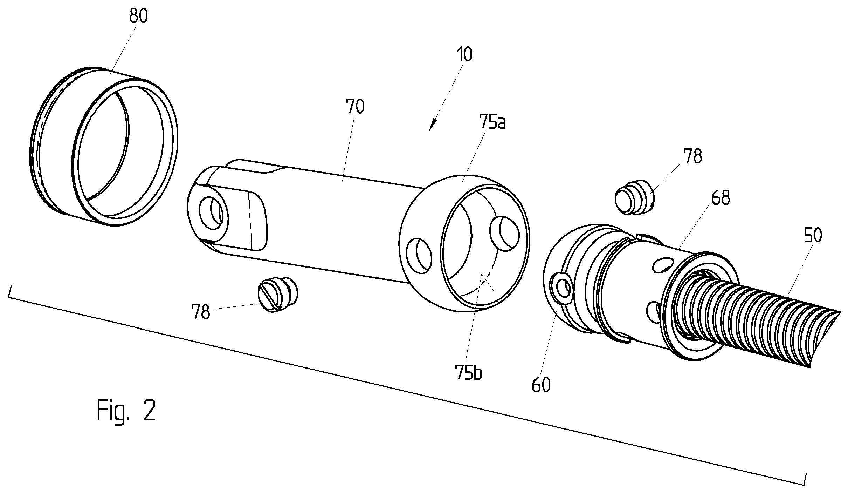

L'action sur la gâchette 40 est transmise à un circuit de contrôle lequel actionne un moteur électrique dans le manche 35, non visible sur les figures. Le moteur agit, éventuellement par l'intermédiaire d'un groupe de réduction, sur un actionneur 10, ici représenté par la vis 50 et l'écrou à billes 68, formant actionneur linéaire, comme il est visible sur la figure 2.

L'actionneur linéaire 10 transforme la rotation du moteur électrique en mouvement de translation axial de l'écrou à billes 68. Ce dernier comporte, à une extrémité distale, une protubérance 60 avec une surface sphérique laquelle s'adapte exactement à la surface sphérique interne 75b d'une cuvette présente sur une extrémité proximale de la bielle 70. Les deux surfaces sphériques 60, 75b permettent la transmission de la force axiale générée par l'actionneur 10 à la bielle 70 et constituent une première liaison de type rotule.

Le diamètre de l'ouverture de la surface sphérique interne 75b est suffisant pour permettre l'insertion de la protubérance 60 qui est ensuite maintenue à l'intérieur de la cuvette par les deux vis opposées 78, visibles sur les figures 2, 1d et 3d. Ces vis permettent également la transmission d'une force de traction sur la bielle 70, tandis que la force de compression est transmise par les surfaces sphériques 60, 75b.

La cuvette de l'extrémité de la bielle 70 comporte également une seconde surface sphérique 75a, externe celle-ci, concentrique avec la surface sphérique 75b. Cette surface sphérique s'adapte à une surface sphérique complémentaire de la bague de guidage 80, formant avec cette dernière une seconde liaison de type rotule concentrique avec la première liaison.

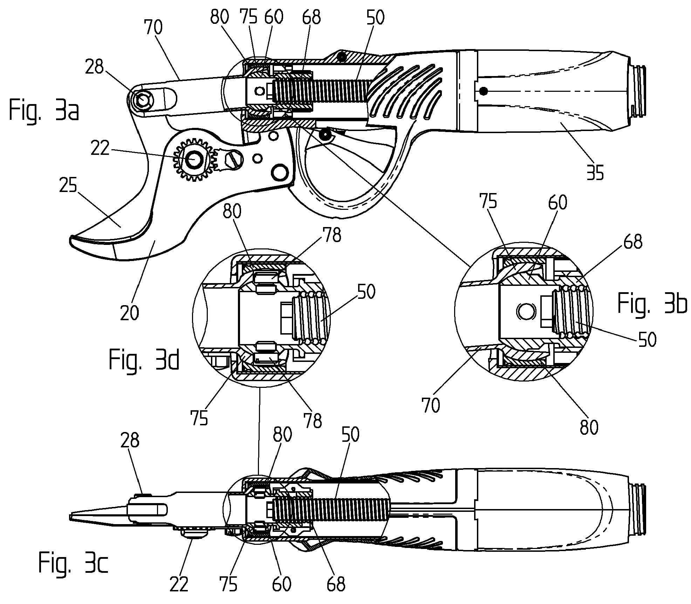

La bague de guidage 80 coulisse linéairement à l'intérieur du corps cylindrique 38 de l'outil, comme il est visible sur les figures 1a, 1c, 3a, 3c. De cette manière l'extrémité proximale de la bielle 70 et le centre de rotation commun de la première et de la seconde rotule sont constamment alignés avec l'axe commun de la vis 50 et du corps cylindrique de l'outil.

Cette double liaison de type rotule a donc l'avantage d'empêcher toute transmission d'effort latéraux à l'actionneur. Les forces radiales sont transmises par la bague de guidage 80 au corps de l'outil 38. On obtient ainsi une boucle de forces très compacte, et une excellente rigidité latérale. En même temps la vis à billes 50 et l'écrou 68 ne doivent supporter aucun effort radial ou de flexion, pour n'importe quelle position de la bielle 70, ce qui augmente l'efficacité de transmission et la fiabilité de l'ensemble.

Un autre aspect avantageux de l'invention est que la bague de guidage 80 empêche le passage de poussières, corps étrangers ou gouttes de liquide de l'avant vers l'arrière de l'outil. Le corps de l'outil et la bague de guidage 80 délimitent ainsi un volume protégé qui abrite la vis à billes et l'écrou 68 formant l'actionneur 10, et de préférence aussi le moteur électrique et toute unité électronique présente dans le manche 35.

Selon un aspect important de l'invention, la bague de guidage 80 est réalisée en un polymère à hautes prestations ayant les caractéristiques mécaniques requises, présentant un faible coefficient de friction, et préférablement autolubrifiant. Des matériaux adaptés à cette application sont, par exemple, le Teflon® (PTFE), le Polyéthylène (PE) le Polyéthylène téréphtalate (PET), le Polyéthylène Téréphtalate Polyester (PETP), le Polyamide, ou le Delrin® (POM). Cette liste n'est pas exhaustive. On peut également, toutefois, réaliser la bague de guidage 80 en métal, par exemple en laiton. La bague de guidage 80 peut être une pièce d'usure, à remplacer lorsque nécessaire, et présente sur son arête antérieure une lèvre 81, visible par exemple sur la figure 1b, afin de nettoyer la surface interne du corps de l'outil de toute saleté qui pourrait s'y déposer.

On peut apprécier, par exemple sur les figures 1a-1c, que la bielle 70 comporte une cavité axiale 72 et que la vis 50 entre partiellement à l'intérieur de cette cavité 72 lorsque l'actionneur est en position rétractée, ce qui correspond, dans cet exemple, à la position dans laquelle les lames sont ouvertes. On a donc une superposition longitudinale, au moins partielle, de l'actionneur et de la bielle, car l'actionneur peut au moins partiellement entrer dans la cavité de la bielle en position rétractée, ce qui permet d'obtenir des outils plus courts, et donc plus légers.

Comme visible sur les figures, lorsque l'opérateur commande la fermeture des lames, la bielle 70 pousse, par l'articulation 28, la lame 25 vers la contre-lame 20. C'est dans cette course de travail de l'outil que les opérations de coupe sont effectuées et que les forces transmises sont le plus importantes. Lors de la course de retour, en revanche, la force de traction exercée par la bielle 70 est sensiblement inférieure.

Grâce au fait que la force de travail est transmise par la bielle 70 en poussant l'organe mobile 25, on peut simplement relier l'actionneur et l'organe mobile par la seule bielle 70, sans besoin de systèmes de leviers composés, ce qui procure une plus grande efficacité d'action. Dans la course de travail, les forces axiales et latérales sont transmises par les surfaces sphériques 60, 75b et 75a, 80 relativement étendues, en sorte que les valeurs de pression restent limitées, même en présence de forces de coupe considérables.

En vertu de la disposition compacte des organes mécaniques de l'invention, on peut utiliser une bielle 70 relativement longue, sans augmenter excessivement l'encombrement longitudinale, et gardant ainsi une distance suffisante entre l'axe 22 de rotation de la lame 25 et le pivot 28. De cette manière, l'angle entre la bielle 70 et le levier 77, visible sur la figure 1a, reste sensiblement proche de sa valeur optimale.

### Numéros de référence employés sur les figures

- 10: actionneur
- 20: organe fixe, contre-lame
- 22: axe
- 25: organe mobile, lame mobile
- 28: articulation
- 30: connecteur
- 35: manche
- 38: corps cylindrique, glissière
- 40: gâchette
- 42: garde
- 50: vis
- 60: protubérance, sphère
- 68: écrou
- 70: bielle
- 72: cavité axiale
- 75: tête de la bielle
- 75a: surface sphérique extérieure
- 75b: surface sphérique intérieure
- 77: levier
- 78: vis
- 80: racloir, élément de guidage
- 81: lèvre
- 100: sécateur

## Revendications

1. Outil électroportatif comprenant un actionneur (10) agissant par l'intermédiaire d'une bielle (70) sur un organe mobile (25) agencé pour effectuer, sous l'action de l'actionneur (10), une course de travail dans un premier sens et une course de retour dans un deuxième sens opposé au premier sens,
dans lequel l'actionneur (10) est appelé à fournir une force de travail lors de la course de travail et une force de retour sensiblement inférieure à la force de travail lors de la course de retour, et dans lequel la force de travail est transmise en poussant l'organe mobile (25)
**caractérisé en ce que**
l'actionneur (10) est relié à la bielle (70) par une première liaison de type rotule (60, 75b) et à un élément de guidage (80) par une deuxième liaison de type rotule (75a, 80) concentrique avec ladite première liaison (60, 75b).

2. Outil électroportatif selon la revendication précédente, dans lequel ledit élément de guidage est une bague de guidage (80) coulissant à l'intérieur du corps cylindrique (38) de l'outil de façon à ce que le corps de l'outil (38) et la bague de guidage (80) délimitent un volume protégé à l'intérieur duquel est disposé l'actionneur (10).

3. Outil électroportatif selon la revendication précédente, dans lequel ladite bague de guidage (80) est réalisée en un polymère synthétique, par exemple un polymère à faible frottement tel que Teflon® (PTFE), Polyéthylène (PE), Polyamide , Delrin® (POM).

4. Outil électroportatif selon l'une des revendications 2 à 3, dans lequel ladite bague de guidage comporte une lèvre (81) pour le nettoyage dudit corps de l'outil (38).

5. Outil électroportatif selon l'une des revendications 2 à 4, dans lequel ladite bielle (70) est creuse et ledit volume protégé inclut également l'intérieur de la bielle (70).

6. Outil électroportatif selon l'une des revendications précédentes, dans lequel ledit actionneur (10) est un actionneur électrique linéaire comprenant un groupe moteur-réducteur agissant sur une vis à billes (50) qui entraine en translation un écrou à billes (68).

7. Outil électroportatif selon l'une des revendications précédentes, dans lequel ledit actionneur (10) entre au moins partiellement, lors du mouvement dudit organe mobile (25), dans une cavité axiale de ladite bielle (70).

8. Outil électroportatif selon l'une des revendications précédentes, dans lequel ledit organe mobile est une lame ou un couteau (25) se déplaçant relativement à une contre-lame (20).

9. Outil électroportatif selon l'une des revendications précédentes, formant sécateur ou cisaille.

## Patentansprüche

1. Eine tragbares elektrisches Werkzeug aufweisend einen Aktuator (10), der mittels eines Verbindungsstabs (70) auf ein bewegliches Element (25) wirkt, ausgebildet, um unter Wirkung des Aktuators (10) einen Arbeitsschlag in eine erste Richtung und eine Rückschlag eine entgegen der ersten Richtung gerichteten zweite Richtung auszuführen,
in dem der Aktuator (10) verwendet wird, um eine Arbeitskraft während des Arbeitsschlag und eine Rückkraft, die grundsätzlich kleiner als die Arbeitskraft ist, während dem Rückschlag bereitzustellen, und
in dem die Arbeitskraft durch das Drücken des beweglichen Elements (25) übertragen wird,
**dadurch gekennzeichnet, dass**
der Aktuator (10) mit dem Verbindungsstab (70) über eine erste Verbindung eines Kugelgelenktyps (60, 75b) und mit einem Führungselement (80) über eine zweite Verbindung eines Kugelgelenktyps (75a, 80), das konzentrisch mit der ersten Verbindung (60, 75b) ist, verbunden ist.

2. Das tragbare elektrische Werkzeug nach dem vorigen Anspruch, wobei das Führungselement (80) ein Führungsring (80) ist, der innerhalb eines zylindrischen Körpters (38) des Werkzeugs gleitet, so dass der Körper des Werkzeugs (38) und der Führungsring (80) ein geschütztes Volumen, innerhalb dem der Aktuator (10) angeordnet ist, begrenzen.

3. Das tragbare elektrische Werkzeug nach dem vorigen Anspruch, wobei der Führungsring (80) aus einem synthetischen Polymer, z.B. einem Niederreibungspolymer, hergestellt ist, wie z.B. Teflon® (PTFE), Polyethylen (PE), Polyamid oder Delrin® (POM).

4. Das tragbare elektrische Werkzeug nach einem der Ansprüche 2 bis 3, wobei der Führungsring (80) eine Lippe (81) zum Reinigen des Körpers des Werkzeugs (38) aufweist.

5. Das tragbare elektrische Werkzeug nach einem der Ansprüche 2 bis 4, wobei der Verbindungsstab (70) hohl ist und das geschützte Volumen auch das innere des Verbindungsstabs (70) aufweist.

6. Das tragbare elektrische Werkzeug nach einem der vorigen Ansprüche, wobei der Aktuator (10) ein linearer elektrischer Aktuator ist, der eine Motorreduziergetriebegruppe aufweist, die auf eine Kugelgewindespindel (50) wirkt, die eine Spindelmutter (68) in Übersetzung antreibt.

7. Das tragbare elektrische Werkzeug nach einem der Ansprüche, wobei der Aktuator (10) während der Bewegung des beweglichen Elements (25) zumindest teilweise in eine axiale Aushöhlung in dem Verbindungsstab (70) eintritt.

8. Das tragbare elektrische Werkzeug nach einem der vorigen Ansprüche, wobei das bewegliche Element eine Klinge oder eine Messer (25) ist, das sich relativ zu einer Gegenklinge (20) bewegt.

9. Das tragbare elektrische Werkzeug nach einem der vorigen Ansprüche, das eine Baumschere oder eine Schere ausbildet.

## Claims

1. A handheld electric tool comprising an actuator (10) acting by means of a connecting rod (70) on a movable element (25) configured to perform, under the action of the actuator (10), a work stroke in a first direction and a return stroke in a second direction opposite the first direction,
in which the actuator (10) is used to provide a work force during the work stroke and a return force substantially smaller than the work force during the return stroke, and in which the work force is transmitted by pushing the movable element (25),
**characterized in that**
the actuator (10) is connected to the connecting rod (70) via a first linkage of ball joint type (60, 75b) and to a guide element (80) via a second linkage of ball joint type (75a, 80), which is concentric with said first linkage (60, 75b).

2. The handheld power tool as claimed in the preceding claim, wherein said guide element is a guide ring (80) that slides inside the cylindrical body (38) of the tool, such that the body of the tool (38) and the guide ring (80) delimit a protected volume within which the actuator (10) is arranged.

3. The handheld power tool as claimed in the preceding claim, wherein said guide ring (80) is made of a synthetic polymer, for example a low-friction polymer, such as Teflon® (PTFE), polyethylene (PE), polyamide, or Delrin® (POM).

4. The handheld power tool as claimed in one of claims 2 to 3, wherein said guide ring comprises a lip (81) for cleaning said body of the tool (38).

5. The handheld power tool as claimed in one of claims 2 to 4, wherein said connecting rod (70) is hollow and said protected volume also includes the interior of the connecting rod (70).

6. The handheld power tool as claimed in one of the preceding claims, wherein said actuator (10) is a linear electric actuator comprising a motor-gear reducer group acting on a ball screw (50), which drives a ball nut (68) in translation.

7. The handheld power tool as claimed in one of the preceding claims, wherein said actuator (10) enters an axial cavity in said connecting rod (70), at least in part, during the movement of said movable element (25).

8. The handheld power tool as claimed in one of the preceding claims, wherein said movable element is a blade or a knife (25) moving relative to a counter blade (20).

9. The handheld power tool as claimed in one of the preceding claims, forming a pruning shear or shear.
